# EUROPÄISCHE PATENTANMELDUNG

(11) **EP 0 681 162 A1**
(43) Veröffentlichungstag der Anmeldung: **08.11.1995**
(21) Anmeldenummer: 95105105.1
(22) Anmeldetag: 05.04.1995
(51) Int. Cl.: G01F 1/66

(54) **Messwertgeber zur Messung von Flüssigkeitsströmungen mit Ultraschall**

(30) Priorität: 05.05.1994 DE 4415889
(71) Anmelder: Hydrometer GmbH, D-91522 Ansbach (DE)
(72) Erfinder: Klass, Walter, D-91522 Ansbach (DE); Gaugler, Ulrich, D-91746 Weidenbach (DE); Henrichs, Bernd, D-91522 Ansbach (DE)
(74) Vertreter: Matschkur, Götz, Lindner Patent- und Rechtsanwälte

(57) **Zusammenfassung**

Meßwertgeber zur Messung von Fluid- insbes. Flüssigkeitsströmungen mit Ultraschall, mit einem Gehäuse mit in Verteilkammern einmündenden, im wesentlichen koaxial zueinander angeordneten Anschlußköpfen für den Zu- und Abfluß der Flüssigkeit, einem die Verteilkammern verbindenden Meßrohr, sowie mit im Gehäuse jeweils im Bereich der Enden des Meßrohrs angeordneten Ultraschall-Wandlern, wobei das Meßrohr gegenüber Verbindungsachse der Anschlußköpfe geneigt ist.

## Beschreibung

Die Erfindung bezieht sich auf einen Meßwertgeber zur Messung von Fluid- insbes. Flüssigkeitsströmungen mit Ultraschall, mit einem Gehäuse mit in Verteilkammern einmündenden, im wesentlichen koaxial zueinander angeordneten Anschlußköpfen für den Zu- und Abfluß der Flüssigkeit, einem die Verteilkammern verbindenden Meßrohr, sowie mit im Gehäuse jeweils im Bereich der Enden des Meßrohrs angeordneten Ultraschallwandlern.

Zur Bestimmung der Strömungsgeschwindigkeit eines fluiden Mediums, insbesondere von Flüssigkeiten, ist es bekannt, durch ein sog. Meßrohr Ultraschallwellenzüge gleichzeitig von beiden Stirnseiten des Rohres in Strömungsrichtung und entgegengesetzt dazu durch die im Meßrohr fließende Flüssigkeit zu senden. Aufgrund der Flüssigkeitsströmung tritt eine Laufzeitdifferenz zwischen den Schaltsignalen auf, die proportional der mittleren Strömungsgeschwindigkeit ist.

Da die Laufzeitdifferenz linear mit der Meßrohrlänge ansteigt, ist ein möglichst langes Meßrohr wünschenswert. Andererseits ist jedoch die maximale Baulänge solcher Meßwertgeber, die überwiegend als Volumenmeßteile für Wärmezähler in der Haustechnik verwendet werden, aufgrund gegebener Einbauvorschriften vorgegeben. So beträgt z.B. die maximale Baulänge eines Wärmezählers, der für einen Nenndurchfluß von 1500 l/h ausgelegt ist, 110 mm.

Ultraschallmeßwertgeber, die als Volumenmeßteile für Wärmezähler eingesetzt werden, sind beispielsweise aus der DE 31 00 777 C2 und der EP 0 392 294 A1 bekannt. Bei der Anordnung nach der DE 31 00 777 ist bei dem Meßwertgeber der eingangs genannten Art das Meßrohr parallel zur Verbindungsachse der Anschlußköpfe versetzt. Damit ist eine Montage des Zählers in der Haustechnik generell möglich. Allerdings bedingt diese Methode erhebliche Gehäusedimensionen, da ja die Gesamtlänge von Meßrohr und den stirnseitig angebrachten Ultraschallwandlern durchaus z.B. 150 mm betragen kann.

Einen anderen Weg geht die EP 0 392 294, bei der die Ultraschallwellen nicht von beiden Stirnseiten des Meßrohrs parallel in dieses eingestrahlt werden, sondern über einen W-förmigen Weg durch das Rohr reflektiert werden. Damit läßt sich allerdings nicht die wirksame Länge der Ultraschallmeßstrecke verlängern, sondern nur die Anordnung der Wandler vereinfachen.

Schließlich sind auch bereits Anordnungen mit einer wendelförmigen Meßstrecke vorgeschlagen worden. Die Qualität der Ultraschallsignale ist dann allerdings in vielen Fällen derart gering, daß das komplette Volumenmeßteil nur eine begrenzte Meßgenauigkeit besitzt.

Der Erfindung liegt daher die Aufgabe zugrunde, einen Meßwertgeber der eingangs genannten Art so auszugestalten, daß bei vorgegebener maximaler Baulänge bei einfachem betriebssicherem Aufbau und hoher Meßgenauigkeit eine größere wirksame Länge des Meßrohrs möglich ist.

Zur Lösung dieser Aufgabe ist erfindungsgemäß vorgesehen, daß das Meßrohr gegenüber der Verbindungsachse der Anschlußköpfe, in der Fläche oder im Raum, geneigt ist.

Durch die erfindungsgemäße Anordnung läßt sich - selbstverständlich auf Kosten einer entsprechenden größeren Breite oder Dicke des Meßwertgebers, was aber in der Praxis häufig problemlos möglich ist, da hier lediglich die in die Rohrleitung einzufügende Länge des Meßwertgebers vorgegeben und begrenzt ist - eine wesentlich größere Länge des Meßrohrs erzielen, als wenn man dieses parallel zur Verbindungsachse der Anschlußköpfe zwischen diesen oder parallel dazu versetzt anordnet.

Dabei können die Ultraschallwandler in Bohrungen der Verteilkammern eingesetzt sein, wobei bevorzugt etwa um 90° gegenüber den Ultraschallwandlern versetzte Blindstopfen vorgesehen sein können, so daß entweder über diese oder die Einsatzbohrungen der Ultraschallwandler das Einsetzen des als gesondertes Bauteil ausgebildeten Meßrohrs in das Gehäuse möglich ist, wobei in diesen Fällen die Befestigung bevorzugt durch Schrauben, Pressen oder über eine Schnappverbindung erfolgen kann.

Statt dessen wäre es auch möglich, das Meßrohr lediglich als eine, vorzugsweise mit Kunststoff ausgekleidete, Bohrung im Gehäuse auszubilden, wobei in beiden Fällen das Gehäuse und/oder das Meßrohr mit besonderem Vorteil aus einem ultraschallabsorbierenden Kunststoff bestehen, bzw. mit einem solchen beschichtet sind, so daß die Schalleinstrahlung einerseits optimal ist und zum anderen Verfälschungen des Meßergebnisses durch Streustrahlung praktisch vermieden sind.

Mit besonderem Vorteil kann vorgesehen sein, daß die Ultraschallwandler den Enden des Meßrohrs koaxial gegenüberliegend angeordnet sind. Statt dessen wäre es selbstverständlich aber auch möglich, die Ultraschallwandler so anzuordnen, daß sie in seitliche Öffnungen im Bereich der Enden des Meßrohrs einstrahlen und somit mehrfache Winkelreflexionen im Meßrohr erreicht werden können.

Gemäß einer weiteren Ausgestaltung der Erfindung läßt sich dabei das Gehäuse besonders einfach in der Weise herstellen, daß es zwei mit einer gewinkelten Innenbohrung versehene Abschnitte aufweist, deren - entweder durch Blindstopfen oder bei Reflexionsmeßstrecken durch die Ultraschallwandler geschlossenen - Innenabschnitte durch einen Meßrohrabschnitt miteinander verbunden sind.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine perspektivische Ansicht eines erfindungsgemäßen Meßwertgebers, und
- Fig. 2: einen Schnitt durch den Meßwertgeber in der Mittelsymmetrieebene.

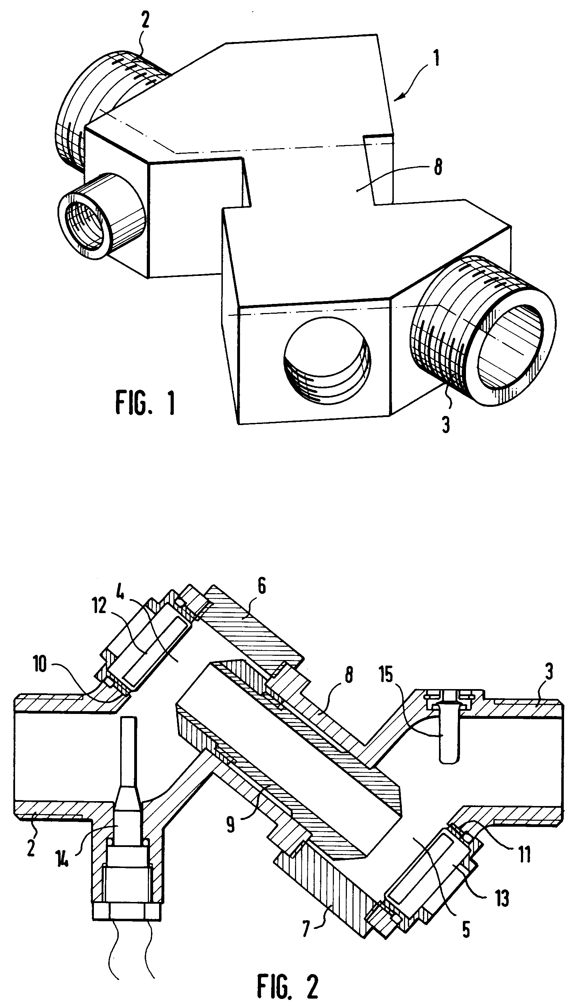

Gemäß den Figuren besteht der Meßwertgeber, dessen elektrische und elektronische Bauteile an sich bekannt und deshalb der Übersichtlichkeit wegen weggelassen worden sind, aus einem Gehäuse 1, das aus einem Guß- oder Preßteil ohne komplizierte Fertigungsverfahren, beispielsweise aus zwei miteinander zu verbindenden identischen Hälften, die in der Schnittebene der Fig. 2 zusammenstoßen, produziert werden kann.

Das Gehäuse umfaßt zwei im wesentlichen koaxial zueinander angeordnete Anschlußköpfe 2 und 3, mit Hilfe deren der Meßwertgeber in eine Rohrleitung mit Hilfe von Schraubverbindungen eingeschaltet werden kann, sowie - im dargestellten Ausführungsbeispiel als L-förmig zu den Anschlußköpfen abgewinkelten Rohrstücken ausgebildeten - Verteilkammern 4 und 5, deren Stirnenden durch Blindstopfen 6 bzw. 7 abgeschlossen sind. Die Verteilkammern 4, 5 sind durch einen Meßrohrabschnitt 8 miteinander verbunden, der im dargestellten Ausführungsbeispiel ein als gesondertes Bauteil ausgebildetes Meßrohr 9 aufnimmt, welches beispielsweise über eine Schraub-, Preß- oder Schnappverbindung gehaltert ist. Das Einsetzen des Meßrohrs 9, das bevorzugt aus einem ultraschallabsorbierenden Kunststoff besteht oder aber mit einem solchen Kunststoff beschichtet ist, erfolgt über die Bohrungen 10 oder 11 zum Einsetzen der Ultraschallwandler 12 bzw. 13. Bei 14 bzw. 15 sind Temperaturfühler zu erkennen, wobei der Temperaturfühler 15 zur Kompensation der temperaturabhängigen Schallgeschwindigkeit dient und der Temperaturfühler 14 zum kompletten Wärmezähler gehört.

Ersichtlich ist die wirksame Länge des Meßrohrs 9 durch die zur Verbindungsachse zwischen den Anschlußköpfen 2 und 3 gekippte Anordnung - je nach dem Kippwinkel - erheblich größer als die mögliche Länge des Meßrohrs bei paralleler Ausrichtung, wie es beispielsweise in der DE 31 00 777 vorgesehen ist. Bei noch dazu weiter kompaktiertem und einfachererm Aufbau ergibt sich auch noch die bevorzugte Möglichkeit, beispielsweise die Wandler 12 und 13 anstelle der Blindstopfen 6 und 7 seitlich neben dem Meßrohr anzuordnen und vorzusehen, daß sie über seitliche Öffnungen in das Meßrohr 9 einstrahlen, um Mehrfachreflexionen im Innern des Rohrs entsprechend der bereits angesprochenen Anordnung nach EP 0 392 294 zu erzielen. Selbstverständlich bedarf es in diesem Fall dann einer besonderen Ausbildung der Innenschicht des Meßrohrs unter Vorsehen gesonderter Reflexionsabschnitte. Dies ist aber an sich bekannt und bedarf deshalb an dieser Stelle keiner näheren Erläuterung. Entscheidend ist im vorliegenden Fall, daß ein und dasselbe Meßwertgeber-Gehäuse lediglich durch Einsetzen eines anderen Meßrohrs sowohl für die axiale Ultraschalleinstrahlung als auch die Reflexionsschallwellenführung eingesetzt werden kann.

## Patentansprüche

1. Meßwertgeber zur Messung von Fluid- insbes. Flüssigkeitsströmungen mit Ultraschall, mit einem Gehäuse mit in Verteilkammern einmündenden, im wesentlichen koaxial zueinander angeordneten Anschlußköpfen für den Zu- und Abfluß der Flüssigkeit, einem die Verteilkammern verbindenden Meßrohr, sowie mit im Gehäuse jeweils im Bereich der Enden des Meßrohrs angeordneten Ultraschall-Wandlern, dadurch gekennzeichnet, daß das Meßrohr (9) gegenüber der Verbindungsachse der Anschlußköpfe (2, 3) geneigt ist.

2. Meßwertgeber nach Anspruch 1, dadurch gekennzeichnet, daß die Ultraschall-Wandler (12, 13) in Bohrungen der Verteilkammern (4, 5) eingesetzt sind.

3. Meßwertgeber nach Anspruch 1 oder 2, dadurch gekennzeichnet, daß das Meßrohr als eine, vorzugsweise mit Kunststoff ausgekleidete, Bohrung im Gehäuse ausgebildet ist.

4. Meßwertgeber nach Anspruch 1 oder 2, dadurch gekennzeichnet, daß das Meßrohr (9) als gesondertes Bauteil ausgebildet ist, das im Gehäuse (1), vorzugsweise durch eine Schraub-, Preß- oder Schnappverbindung, befestigt ist.

5. Meßwertgeber nach Anspruch 4, dadurch gekennzeichnet, daß das Gehäuse (1) und/oder das Meßrohr (9) aus einem ultraschallabsorbierenden Kunststoff bestehen, bzw. mit einem ultraschallabsorbierenden Kunststoff beschichtet sind.

6. Meßwertgeber nach einem der Ansprüche 1 bis 5, dadurch gekennzeichnet, daß die Ultraschall-Wandler (12, 13) den Enden des Meßrohrs (9) koaxial gegenüberliegend angeordnet sind.

7. Meßwertgeber nach einem der Ansprüche 1 bis 6, dadurch gekennzeichnet, daß das Gehäuse (1) zwei mit einer gewinkelten Innenbohrung versehene Abschnitte aufweist, deren geschlossene Innenabschnitte (4, 5) durch einen Meßrohrabschnitt (8) miteinander verbunden sind.
